# EUROPEAN PATENT APPLICATION

(11) **EP 3 444 635 A1**
(43) Date of publication of application: **20.02.2019**
(21) Application number: 18188123.6
(22) Date of filing: 09.08.2018
(51) Int. Cl.: G01S 17/89, G01S 7/481, G02B 27/00, G02B 3/00

(54) **RECEIVER UNIT FOR A LASER SCANNER DEVICE, LASER SCANNER DEVICE, VEHICLE AND METHOD FOR CAPTURING LIGHT**

(30) Priority: 14.08.2017 DE 102017118436
(71) Applicant: Valeo Schalter und Sensoren GmbH, 74321 Bietigheim-Bissingen (DE)
(72) Inventor: Lin, Lin, 74321 Bietigheim-Bissingen (DE); Nguyen, Ho-Hoai-Duc, 74321 Bietigheim-Bissingen (DE); Horvath, Peter, 74321 Bietigheim-Bissingen (DE)

(57) **Abstract**

The invention relates to a receiver unit (4) for a laser scanner device (2), wherein the receiver unit (4) comprises a first converging lens (7) comprising a first focal plane, and an imager (9), which is capable of capturing light that has passed through the first converging lens (7). The receiver unit (4) comprises a first optical unit (8) positioned between the first converging lens (7) and the imager (9), wherein the first optical unit (8) is configured to project light passing through a certain area of the focal plane onto a certain area of the imager (9) such that the certain area of the imager (9) is smaller than the certain area of the focal plane.

## Description

The invention is concerned with a receiver unit for a laser scanner device, wherein the receiver unit comprises a converging lens comprising a focal plane and an imager, which is capable of capturing light that has passed through the converging lens. The invention also is concerned with a laser scanner device, a vehicle and a method for capturing light by means of a receiver unit.

Different laser scanner devices are known from the prior art like Lidars or projectors. Especially for vehicle related applications the required scanning field of view, especially in the horizontal direction, is usually very large, for instance 150°. The dimensions of an imager should be very small, because of the prize of such imagers depends on the imager area. So, on the one hand, for normal, small imagers a lens having a short focal length would be necessary for providing a large field of view. On the other hand, in order to collect enough light to obtain an effective received signal, the effective aperture of such a receiver lens should be as large as possible. So a lens would be required having an extremely small f-number, which is defined as the focal length divided by the aperture. However, nominally the minimum value of the f-number is around 0,7 for conventional imaging lenses in reality, which would be still far away from the required f-number of lenses suitable for above named applications. Moreover, a single lens with a low f-number is also hard to manufacture and therefore expensive as well. One possibility of realizing a large field of view would be using a fisheye lens. However, nominally such fisheye lenses are very expensive and especially suffer from the drawback that their effective aperture compared to their diameter is very small. Therefore, for providing high capturing quality and a large field of view at the same time only expensive solutions are available up to now, like using large and expensive imagers.

Therefore it's an object of the present invention to provide a receiver unit, a laser scanner device, a vehicle and a method, which allow for a high capturing quality and a cost effective configuration at the same time, especially which allow for using cheaper imagers. In particular, it is an object of embodiments of the present invention to further provide the possibility to realize a large field of view with a large aperture in a cost effective manner at the same time.

This object is solved by a receiver unit, a laser scanner device, a vehicle and a method comprising the features according to the independent claims. Advantages embodiment of the invention are subject of the dependent claims, the description and the figures.

The receiver unit for a laser scanner device according to the invention comprises a first converging lens, which comprises a first focal plane, and an imager, which is capable of capturing light that has passed through the first converging lens. Moreover, the receiver unit comprises a first optical unit positioned between the first converging lens and the imager, wherein the first optical unit is configured to project light passing through a certain area of the focal plane of the first converging lens onto a certain area of the imager such that the certain area of the imager is smaller than the certain area on the focal plane.

So, by providing a first optical unit between the converging lens and the imager, it is possible to downsize the focal area effectively, which means a first converging lens can be used, which has focal area, which is, at least in one direction, much larger than the size of the actual imager chip, at least in this direction. This allows for example for a large focal length of the converging lens, further having a large effective aperture, which can collect more light and enhance the received signal, and at the same time the size of the imager can be kept small. Therefore, a very cost-effective receiver unit can be provided, as neither extremely low f-number lenses are required nor imagers having a large size.

According to an especially advantageous embodiment of the invention the receiver unit comprises at least one second converging lens and at least one second optical unit positioned between the at least one second converging lens and the imager, wherein the first converging lens is associated with a first field of view and the at least one second converging lens is associated with at least one second field of view, wherein the first and the at least one second field of view constitute a total field of view of the receiver unit, wherein the total field of view is larger than the first and at least one second field of view each.

According to this advantageous embodiment a very large total field of view and a large aperture of the receiver unit can be realized at the same time. So, advantageously a large total field of view can be provided as a composition of the single fields of view associated with the respective converging lenses. Especially, again by means of the respective optical units positioned between the respective converging lenses and the imager, light passing through the converging lenses can advantageously be captured by one and the same imager. And consequently, the total field of view can be enlarged without the need of several or larger imagers. Again the focus area of each converging lens can be much larger than the size of the actual imager chip. Here, focus area has to be understood as the area of the focal plane of the converging lens, onto which parallel light beams passing through the lens from different directions can be focused. Especially, as a required total field of view can be split up into small fields of view, each associated with a converging lens, the requirement for a low f-number of the converging lenses can be loosened further, and an even larger field of view with an even larger aperture can be provided by this advantageous embodiment without the need for any larger imager chip. So, also the converging lenses can be manufactured in an even more cost-effective manner, and neither expensive fisheye lenses nor expensive imagers are needed.

Moreover, the field of view associated with the converging lens, namely the first and at least one second converging lens, not necessarily has to be understood as the field of view of the converging lens itself, but rather as the effective field of view of the combination of the converging lens, the respective optical unit and the imager. But preferably, the imager and the respective optical units are configured such that the whole field of view of the each converging lens, at least in one direction, especially a horizontal direction with regard to the intended arrangement position of the receiver unit on a vehicle, is capturable by the imager.

Preferably, the first converging lens comprises a first optical axis and the at least one second converging lens comprises a second optical axis, wherein the first optical axis and the second optical axis intersect and lie in a predefined plane. In particular, this predefined plane may coincide with a horizontal plane with respect to the intended arrangement position of the receiver unit on a vehicle. Also in case the receiver unit comprises more than two converging lenses, preferably the optical axis of these respective converging lenses intersect and lie in the same predefined plane. Accordingly, a very large total field of view can be provided extending over a large angle range with regard to this predefined plane. So, especially for vehicle related applications a very large total field of view can be provided in the horizontal plane. Of course, for other applications, which require for example also a large field of view in the vertical direction, converging lenses can be provided, which are arranged such, that their optical axis do not lie within a single predefined plane, but for example in several different, optionally intersecting, planes.

Generally, the receiver unit can comprise any arbitrary number of converging lenses and respective optical units. So the receiver unit can comprise several single receiver segments, each segment comprising a converging lens and a respective optical unit. However, as also the complexity of the system increases with an increasing number of receiver segments, it is preferred that the receiver unit comprises for example only two or three converging lenses and respective optical units, thus only two or three receiver segments, because this is the most cost-effective way to provide a total field of view preferably of 120° to 180°, especially of 150°, in at least one defined plane, which preferably comprises the optical axis of each converging lens, and which preferably constitutes the horizontal plane with regard to the intended arrangement position of the receiver unit on a vehicle.

To provide a total field of view of for example 150°, three converging lenses can be provided, each comprising a field of view of 50°, or two converging lenses can be used, each comprising a field of view of 75°, at least with regard to above-named defined plane. However, the fields of view of the converging lenses do not have to be equally large, they can also be different from each other. To split up a total field of view in a very effective way, it is preferred that each converging lens is associated with a field of view of at least 20°, and with regard to at least one defined plane. Therefore, a lot of flexibility and many possibilities of constituting a large total field of view are provided and therefore there receiver unit is easily configurable and adaptable to many different situations or applications.

The working principle of the combination of the at least one second converging lens and the second optical unit is similar to that of the combination of the first converging lens and the first optical unit. Therefore, all of further embodiments and configurations relating to the first receiver segment, namely the first converging lens and the first optical unit and elements thereof described in the following in more detail similarly apply to any further receiver segment as well.

According to another advantageous embodiment of the invention the first optical unit comprises a first optical deflecting arrangement, which comprises a plurality of different predefined areas at different positions, wherein each area is associated with a respective first incident angle range, such that the light impinging on the first converging lens in a certain first incident angle range is directed towards the associated area of the first optical deflecting arrangement, and wherein the first optical deflecting arrangement is configured such that the light, impinging on the different predefined areas of the first optical deflecting arrangement is transmitted through the first optical deflecting arrangement and thereby deflected towards the imager such that it is received by the imager on corresponding different imager areas.

By means of the optical deflecting arrangement light can be redirected and conducted to the correct positions on the imager. Moreover, due to the different predefined areas of the first optical deflecting arrangement different optical channels can be provided, each corresponding to a certain incident angle range. Thereby, a spatially resolved image of the surrounding of the receiver unit can be captured. Generally, an incident angle is defined as the angle between an incident ray of light and a plane perpendicular to the optical axis of the converging lens.

According to another advantageous embodiment of the invention the first optical unit comprises a first microlens array arranged between the first converging lens and the first optical deflecting arrangement, wherein the first microlens array is configured such that light impinging on the first converging lens in a certain first incident angle range is directed by means of the first microlens array towards the associated area of the first optical deflecting arrangement. By means of this first microlens array additional advantages can be achieved, especially the light beam spot size of each channel can be reduced, and resolution and accuracy of the light capturing can be enhanced.

Preferably, the first microlens array is positioned in a predefined region comprising the focal plane of the first converging lens, and especially is positioned on the focal plane of the first converging lens. This advantageously allows for a very high resoluted projection of light associated with different incident angle ranges onto the corresponding areas of the first optical deflecting arrangement and at the same time light losses can be kept very low.

According to another advantageous embodiment of the invention the first microlens array is configured to converge light passing through the first microlens array towards the first optical deflecting arrangement, and especially is configured such that angles between respective main rays of respective ray bundles passing through different microlenses of the microlens array a reduced when passing through the microlenses. The configuration of the first microlens array to converge light towards the first optical deflecting arrangement has the great advantage, that the diameter of beam spots can be reduced by means of the microlens array. Especially, light beams passing through respective microlenses of the first microlens array can be converged or even focused separately on respective areas of the first deflecting arrangement, wherein each microlens of the first microlens array is associated with a certain area of the first optical deflecting arrangement. Thereby, resolution, quality and signal to noise ratio can be improved. To achieve the best result, especially the smallest possible diameter of all the beam spots of respective channels, it is further preferred, that the first optical deflecting arrangement is positioned in a predefined region comprising a focal plane of the frist microlens array, and especially is positioned on the focal plane of the first microlens array. Thereby the larger beam spots in the focal plane of the first converging lens can be focused by means of the first microlens array onto respective areas of the first optical deflecting arrangement. Moreover, the first microlens array can also be used to make the light beams, especially received laser beams, of each channel parallel to each other, at least in a timely sequence, so that the design of the optical deflecting arrangement for deflecting the respective light beams to their corresponding positions on the imager can be reduced in complexity. Further, the first microlens array can also be configured as a free-form microlens array. This provides more flexibility for deflecting and shaping beams in adaption to the respective channels, along which these beams propagate. This is very advantageous, as the optical path of each channel is different, so that the free-form microlens array provides better adaption possibilities.

According to another advantageous embodiment of the invention the first optical deflecting arrangement is configured such that each predefined area is associated with a certain deflection angle, by which light transmitting the first optical deflecting arrangement in this certain area is deflected. In particular, at least two of the certain areas differ with regard to their associated deflection angle, and especially, the first optical deflecting arrangement is configured such that the deflection angles associated with respective areas on the first optical deflecting arrangement are the larger the farer the position of the areas from a central axis of the imager is. The central axis of the imager can be defined as surface normal of the imager in its center. Therefore light within channels, which are farer away from the central axis of the imager, can be deflected stronger by means of the first optical deflecting arrangement than light propagating in channels, which are very close to the central axis of the imager. Thus, light from very large focal areas of the converging lenses can be projected onto a very small imager in a very accurate, effective and homogeneous way.

According to another advantageous embodiment of the invention the first optical deflecting arrangement is configured as a second microlens array, especially as an off-axis microlens array. Such an off-axis microlens array, also called decentered microlens array, may comprise several pairs of microlenses, each pair comprising two microlenses with respective optical axis that are oriented parallel to each other and are spaced apart from each other with a certain distance. Such a pair of off-axis lenses has the effect that for example a ray of light entering the first lens parallel to its optical axis and passes through the first and the second lens, then leaves the second lens with an incline angle respective to the optical axis, which depends in its size on the certain distance, which the optical axis of the lenses are spaced apart. So advantageously, such a pair of off-axis lenses changes the propagation direction of the light beams as a whole, especially without influencing the shape of such a light beam a lot, meaning without influencing the divergence or convergence of light beams a lot. Therefore, such an off axis microlens array is very advantageous for redirecting the light of different channels to the desired position on the imager.

According to another advantageous embodiment of the invention the first optical deflecting arrangement is configured as a microprism array. Therefore, light propagating along different channels is deflected by means of such a microprism array according to Snell's law. This is another advantageous way of deflecting a light beam as a whole by a certain angle without influencing the shape of such a light beam a lot.

Optionally, also the optical deflecting arrangement, especially the off-axis microlens array or microprism array, may comprise a freeform structure, and be e.g. configured as an array with freeform lenses or prisms. This would be especially advantageous, if the optical unit only comprises the optical deflecting arrangement and no separate first microlens array.

According to another advantageous embodiment of the invention the receiver unit comprises a refractive coating, which is positioned on the imager, wherein the refractive coating is configured such that rays of light impinging on the refractive coating with a first incident angle different from 90°, are refracted such that they impinge on the imager with a second incident angle, which is larger than the first incident angle. If for example a parallel ray bundle having certain diameter is impinging on the surface of the imager in a very flat angle, this would create a beam spot on the surface of the imager, which would be much larger than the beam spot of a ray bundle impinging on the imager with an incident angle of 90°. Therefore, according to this advantageous embodiment of the invention, the beam spot size of beams, especially at the peripheral of the imager, can advantageously be reduced. The coating can for example be provided by a transparent material with an index of refraction greater than that of air causing a refraction of incident light towards the normal of the coating surface. So, advantageously, the beam spot sizes can be homogenized over the whole imager area and approximately the same quality and accuracy can be achieved at the periphery of the imager as in the middle.

The invention also relates to a laser scanner device comprising a receiver unit according to the invention or one of its embodiments.

According to an advantageous embodiment of the laser scanner device, which is preferably configured as a pulsed laser scanner, the laser scanner device comprises an emitting unit configured to emit laser light beams subsequently in different directions. If an object is positioned in at least one of these different directions, the respective emitted laser light beams are at least in part reflected and received by the receiver unit with a corresponding incident angle within one of the certain incident angle ranges.

The invention also relates to a vehicle comprising a receiver unit according to the invention or one of its embodiments, and especially comprising a laser scanner device according to the invention or one of its embodiments.

The advantages described with regard to the receiver unit according to the invention and its embodiments analogously apply also to the laser scanner device and the vehicle according to the invention and its embodiments.

Moreover, the invention also is concerned with a method for capturing light by means of a receiver unit for a laser scanner device, wherein the receiver unit comprises a first converging lens and an imager capable of capturing light that has passed through the first converging lens. Moreover, the receiver unit comprises a first optical unit positioned between the first converging lens and the imager, wherein the first optical unit projects light passing through a certain area of the focal plane onto a certain area of the imager such that the certain area of the imager is smaller than the certain area of the focal plane.

Advantages described with regard to the receiver unit according to the invention and its embodiments similarly apply to the method according to the invention. Moreover, the features described with regard to the embodiments of the receiver unit constitute further corresponding advantageous embodiments of the method according to the invention.

Further features of the invention are apparent from the claims, the figures and the description of figures. The features and feature combinations mentioned above in the description as well as the features and feature combinations mentioned below in the description of figures and/or shown in the figures alone are usable not only in the respectively specified combination, but also in other combinations without departing from the scope of the invention. Thus, implementations are also to be considered as encompassed and disclosed by the invention, which are not explicitly shown in the figures and explained, but arise from and can be generated by separated feature combinations from the explained implementations. Implementations and feature combinations are also to be considered as disclosed, which thus do not have all of the features of an originally formulated independent claim. Moreover, implementations and feature combinations are to be considered as disclosed, in particular by the implementations set out above, which extend beyond or deviate from the feature combinations set out in the relations of the claims.

Therein show:
- Fig. 1: a schematic illustration of a top view on a vehicle with a laser scanner device according to an embodiment of the invention;
- Fig. 2a: a schematic cross-sectional illustration of a receiver unit comprising three receiver segments according to an embodiment of the invention;
- Fig. 2b: a schematic illustration of an imager with a refractive coating of a receiver unit according to an embodiment of the invention; and
- Fig. 3a: a schematic illustration of a microprism array of a receiver unit according to an embodiment of the invention.
- Fig. 3b: a schematic illustration of microprism of the microprism array of Fig. 3a; and
- Fig. 4: a schematic illustration of a pair of microlenses of a microprism array of a receiver unit according to an embodiment of the invention.

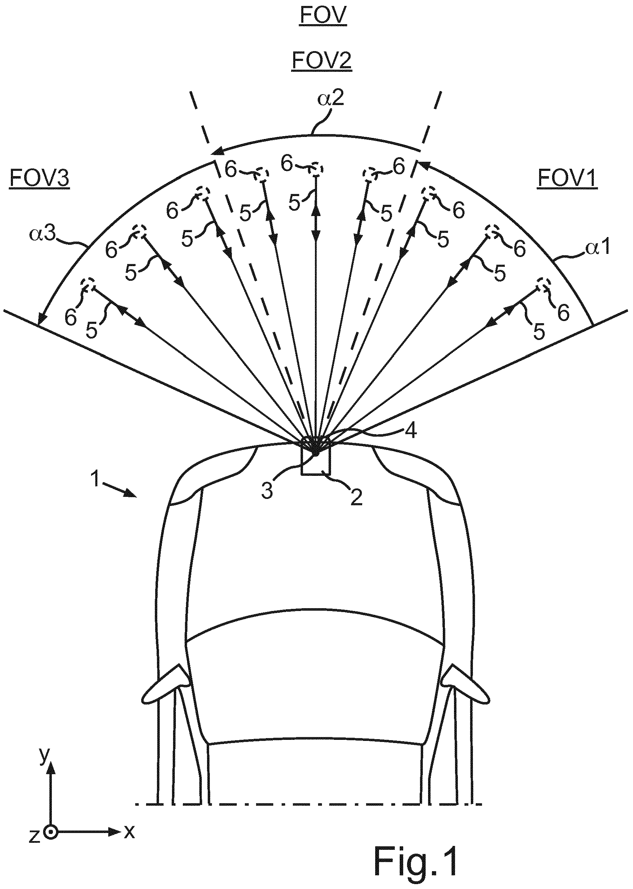

Fig. 1 shows a schematic illustration of the top view on a vehicle 1, especially the front part of a vehicle 1, comprising a laser scanner 2 according to an embodiment of the invention. The laser scanner 2 comprises an emitting unit 3 and a receiver unit 4. The emitting unit 3 is configured to emit laser beams 5 in a pulsed manner, such that each of the illustrated laser beams 5 is emitted by the emitting unit 3 at a certain time step in a certain direction with respect to the horizontal plane, which here corresponds to the x-y-plane of the shown coordinate system, and which is defined by a plane perpendicular to the vertical axis of the vehicle 1. Moreover, the emitting unit 3 is configured to emit monochromatic light beams having a certain wavelength in any arbitrary wavelength range, preferably in the infrared spectral range, at 905 nm. If an object 6 is positioned in the direction, in which a laser beam 5 is emitted, then at least part of the laser beam 5 is reflected back and received by the receiver unit 4.

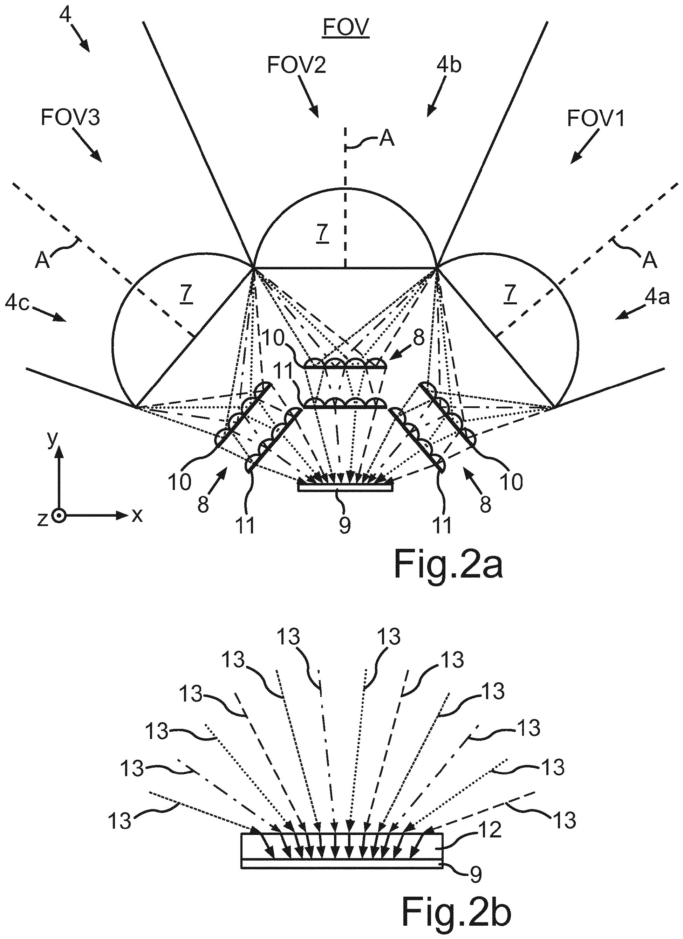

The receiver unit 4 can be seen in more detail in Fig. 2a, which shows a schematic illustration of the receiver unit 4, which comprises in this example three receiver segments 4a, 4b and 4c and an imager 9, which can be configured as a 2D imager comprising a 2D pixel array. Each of the receiver segments 4a, 4b, 4c comprises a converging lens 7 and an optical unit 8.

First of all, by providing several converging lenses 7, each associated with a respective field of view FOV1, FOV2, FOV3, an extremely large total field of view FOV can be provided as well as a large total aperture of the receiver unit 4. Additionally, due to the respective optical units 8, the imager chip, which is the sensing surface of the imager 9, can be much smaller than the respective focal areas of the converging lenses 7. This allows for a large focal length of each converging lens 7 and further allows for a large effective aperture, which can collect more light and enhance the received signals, without the need of any low f-number lenses and any large and expensive imagers. In this way, a large field of view as well as a large aperture is realized at the same time in a very cost-effective way providing a high capturing quality.

The total field of view FOV as a composition of the single fields of view FOV1, FOV2, FOV3 is also illustrated in Fig. 1. Each of the single fields of view FOV1, FOV2, FOV3 may cover a certain viewing angle α1, α2, α3 in the horizontal plane, which can be the same, but need not be the same. Thereby, e.g. a total field of view FOV of 150° can be provided by the composition of the three fields of view FOV1, FOV2, FOV3, each covering a viewing angle α1, α2, α3 of 50° in the horizontal plane.

Referring back to Fig. 2, each converging lens 7 comprises an optical axis A, and the converging lenses 7 preferably are arranged such that these optical axis A lie in the same plane, which here is again the x-y-plane, and which corresponds to the horizontal plane. This way, a large field of view in the horizontal direction can be created.

Furthermore, each optical unit 8 comprises a microlens array 10, and an optical deflecting arrangement 11. The microlens arrays 10 preferably are positioned on the focal planes of the respective converging lenses 7. Therefore, each converging lens 7 focuses light depending on its incident angle onto the respective regions of the microlens array 10. Therefore, light impinging on respective microlenses of the microlens array 10 corresponds to light with an incident angle within an associated certain incident angle range. The incident angle hereby is defined as the angle between a ray of light and a plane, which is perpendicular to the optical axis A of a respective converging lens 7. Therefore, for each incident angle range separate channels are provided within the respective receiver segments 4a, 4b, 4c. The microlens array 10 is configured to focus the larger beam spots of light beams, especially laser light beams, that have passed through the respective converging lenses 7 to a smaller area, especially on the focal plane of the respective microlens arrays 10, on which the optical deflecting arrangement 11 is positioned. Furthermore, the microlens array 10 can also be configured to make the laser beams of each channel parallel to each other. So by means of the microlens array 10 relative larger beam spots from the outside optics, which are the converging lenses 7, can be focused into an even smaller area and furthermore, the laser beams, or rather the principal rays of each beam, of each channel can be parallelized. For this purpose, the microlens array 10 can also be configured as a free-form microlens array to better cope with the differences between the optical paths of the respective channels.

The respective optical deflecting arrangements 11 then conduct the respective light beams of corresponding channels to their correct positions on the imager 9. The respective optical deflecting arrangements 11 can either be configured as a microlens array or as microprism array, which is explained later in more detail. This way, each position on the imager 9 corresponds to an associated incident angle range with regard to the respective converging lens 7.

As can be seen from Fig. 2a, light propagating along channels, which are further away from the center of the imager 9, impinges on the imager 9 with incident angles that are much smaller than that of light in the channels nearer the center of the imager 9. To compensate for these differences in incident angles with regard to the imager 9, the imager can comprise a refractive and transparent coating which is illustrated in Fig. 2b.

Fig. 2b shows a schematic illustration of an imager 9 of a receiver unit 4 according to another embodiment of the invention. The surface of the imager 9 comprises a transparent and refractive coating 12. This coating 12 has a refraction index greater than that of air and therefore it is advantageously be configured to refract light towards the surface normal as illustrated. Moreover, the coating can have a planar surface and a certain thickness. Here light emanating from the respective areas of the optical deflecting arrangements 11 corresponding to different channels is denoted by 13. As can be seen, the incline angles can be enlarged especially with regard to the periphery of the imager 9.

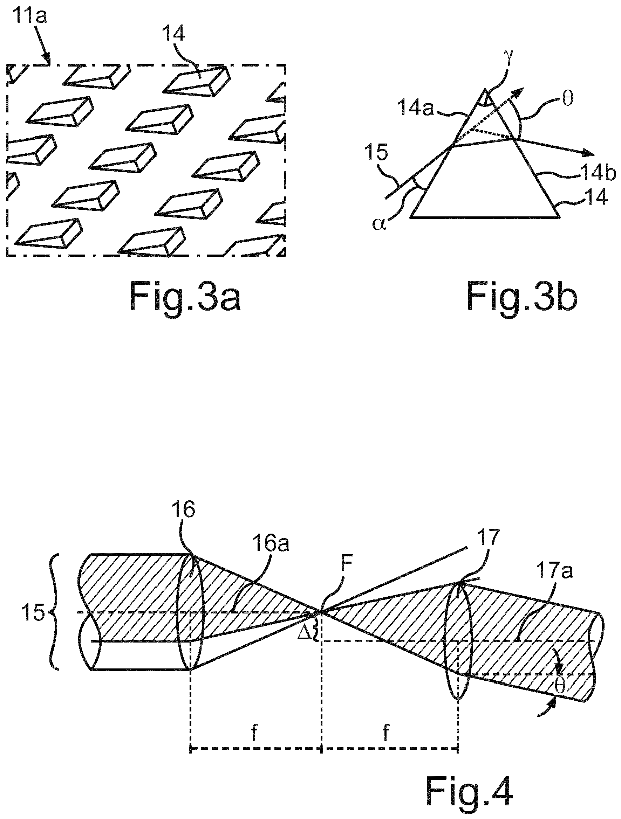

Fig. 3a shows a schematic illustration of a microprism array 11a as a possible configuration of the optical deflecting arrangement 11 of a receiver unit 4 according to an embodiment of the invention. As already explained, it's the purpose of the optical deflecting arrangement 11 to deflect incoming laser beams to direct them to the corresponding imager areas. For this purpose, advantageously, a microprism array 11a can be used. Such a microprism array 11a comprises a plurality of microprisms 14. And depending on the application, the array 11a can be a one-dimensional array, comprising only one line of a plurality of microprisms 14, or also can be configured as a two dimensional array, as shown in Fig. 3a, comprising several lines, each comprising a plurality of microprism 14. Though shown here for the sake of simplicity, the microprism 14 do not need to have an identical shape, in the contrary, the microprism 14 can be shaped differently to achieve different deflecting angles for different channels. The principle of deflecting rays passing through such a microprism is now explained in more detail with regard to Fig. 3b.

Fig. 3b shows a schematic illustration of a cross-sectional view of a microprism 14 as well as an exemplary ray 15 of monochromatic light. This ray impinges on the first surface 14a of the microprism 14 with an incident angle α, is refracted by the first surface 14a, impinging on the second surface 14b, and finally is refracted once more by the second surface 14b. Due to these refractions the resulting ray is deflected by a deflection angle Θ with respect to the direction of the incoming ray 15. This deflection angle Θ depends on the refraction index of the prism 14, the incident angle α, as well as on the inner angle γ of the prism 14 between the two surfaces 14 a, 14b. So, for providing different deflection properties at different positions of the microprism array 11a, the microprisms 14 can for example be provided with different inner angels γ at different positions.

In the alternative, the optical deflecting arrangement 11 can also be configured as a microlens array comprising multiple pairs of micro-lenses, one of which is illustrated in Fig.4. Thereby Fig. 4 shows a schematic illustration of such a pair of microlenses, comprising a first microlens 16 and a second microlens 17. The first microlens 16 comprises an optical axis denoted by 16 a, and the second microlens 17 comprises an optical axis denoted by 17a, wherein the optical axis 16a, 17a are parallel to each other and comprise a distance Δ. Further, an incoming bundle of parallel rays impinging on the first lens 16 is again donated by 15. The first lens 16 then focuses that incoming ray bundle 15, which has a propagation direction parallel to the optical axis 16a in this example, on a focal point F, which has a distance from the second microlens 17 that corresponds to the focal length f of the second microlens 17. Therefore, when passing further through the second microlens 17 the ray bundle 15 is again collimated, however, now comprising a deflection angle Θ with regard to the direction of the incoming ray bundle 15, which in this case is parallel to the optical axis 16a, 17a.

Though shown in this example, the microlenses 16, 17 do not have to be configured identical. Especially they can comprises different focal lengths f, and also can have different sizes or apertures. As can be seen in Fig. 4, in this configuration a part of the incoming ray bundle 15 gets lost and only the part of the ray bundle 15, which is drawn hatched can be captured by the second microlens 17. However, this lost can be avoided, by a corresponding large configuration of the second microlens 17, e.g. with a larger aperture.

Therefore, also by means of such off-axis microlens array easily different deflection angles Θ can be provided for different regions of the microlens array by corresponding distances Δ between the respective optical axis of microlens pairs.

To conclude, by means of the invention a receiver unit can be provided, which makes it possible to realize a large field of view and a large aperture at the same time, thereby providing a high capturing accuracy and quality in a very cost-effective manner.

## Claims

1. Receiver unit (4) for a laser scanner device (2), wherein the receiver unit (4) comprises
- a first converging lens (7) comprising a first focal plane; and
- an imager (9), which is capable of capturing light that has passed through the first converging lens (7),
**characterized in that**
- the receiver unit (4) comprises a first optical unit (8) positioned between the first converging lens (7) and the imager (9),
- wherein the first optical unit (8) is configured to project light passing through a certain area of the focal plane onto a certain area of the imager (9) such that the certain area of the imager (9) is smaller than the certain area of the focal plane.

2. Receiver unit (4) according to one claim 1,
**characterized in that**
the receiver unit (4) comprises at least one second converging lens (7) and at least one second optical unit (8) positioned between the at least one second converging lens (7) and the imager (9), wherein the first converging lens (7) is associated with a first field of view (FOV3) and the at least one second converging lens (7) is associated with at least one second field of view (FOV1, FOV2), wherein the first and at least one second field of view (FOV1, FOV2, FOV3) constitute a total field of view (FOV) of the receiver unit (4), wherein the total field (10) of view is larger than the first and at least one second field of view (FOV1, FOV2, FOV3) each.

3. Receiver unit (4) according to claim 2,
**characterized in that**
the first converging lens (7) comprises a first optical axis (A) and the at least one second converging lens (7) comprises a second optical axis (A), wherein the first optical axis (A) and the second optical axis (A) intersect and lie in a predefined plane.

4. Receiver unit (4) according to one of the preceding claims,
**characterized in that**
the first optical unit (8) comprises a first optical deflecting arrangement (11, 11a), which comprises a plurality of different predefined areas at different positions, wherein each area is associated with a respective first incident angle range such that light impinging on the converging lens (7) in a certain first incident angle range is directed towards the associated area of the first optical deflecting arrangement (11, 11a), and wherein the first optical deflecting arrangement (11, 11a) is configured such that light, impinging on the different predefined areas of the first optical deflecting arrangement (11, 11a) is transmitted through the first optical deflecting arrangement (11, 11a) and thereby deflected towards the imager (9) such that it is received by the imager (9) on corresponding different imager areas.

5. Receiver unit (4) according to one of the preceding claims,
**characterized in that**
the first optical unit (8) comprises a first microlens array (10) arranged between the first converging lens (7) and the first optical deflecting arrangement (11, 11a), wherein the first microlens array (10) is configured such that light impinging on the converging lens (7) in a certain first incident angle range is directed by means of the first microlens array (10) towards the associated area of the first optical deflecting arrangement (11, 11a).

6. Receiver unit (4) according to claim 5,
**characterized in that**
the first microlens array (10) is positioned in a predefined region comprising the focal plane of the first converging lens (7), especially is positioned on the focal plane of the first converging lens (7).

7. Receiver unit (4) according to one of the claims 5 or 6,
**characterized in that**
the first microlens array (10) is configured to converge light passing through the first microlens array (10) towards the first optical deflecting arrangement (11, 11a), and especially is configured such that angles between respective main rays of respective ray bundles passing through different microlenses of the first microlens array (10) are reduced when passing through the microlenses.

8. Receiver unit (4) according to one of the preceding claims,
**characterized in that**
the receiver unit (4) comprises a refractive coating (12) which is positioned on the imager (9), wherein the refractive coating (12) is configured such that rays of light impinging on the refractive coating (12) with a first incident angle different from 90° are refracted such that they impinge on the imager (9) with a second incident angle, which is larger than the first incident angle.

9. Receiver unit (4) according to one of the claims 4 to 8,
**characterized in that**.
the first optical deflecting arrangement (11, 11a) is configured such that each predefined area is associated with a certain deflection angle (Θ) by which light transmitting the first optical deflecting arrangement (11, 11a) in this certain area is deflected by this angle (Θ), wherein at least two of the certain areas differ with regard to their associated deflection angle (Θ), especially the first optical deflecting arrangement (11, 11a) is configured such that the deflection angles (Θ) associated with respective areas on the first optical deflecting arrangement (11, 11a) are the larger the farer the position of the areas from a central axis of the imager (9) is.

10. Receiver unit (4) according to one of the claims 4 to 9,
**characterized in that**.
the first optical deflecting arrangement (11, 11a) is configured as a second microlens array, especially as an off-axis microlens array.

11. Receiver unit (4) according to one of the claims 4 to 10,
**characterized in that**.
the first optical deflecting arrangement (11, 11a) is configured as a microprism array (11a).

12. Laser scanner device (2) comprising a receiver unit (4) according to one of the preceding claims.

13. Vehicle (1) comprising a receiver unit (4) according to one of the claims 1 to 11.

14. Method for capturing light by means of a receiver unit (4) for a laser scanner device (2), wherein the receiver unit (4) comprises
- a first converging lens (7); and
- an imager (9), which is capable of capturing light that has passed through the first converging lens (7),
**characterized in that**
- the receiver unit (4) comprises a first optical unit (8) positioned between the first converging lens (7) and the imager (9),
- wherein the first optical unit (8) projects light passing through a certain area of the focal plane onto a certain area of the imager (9) such that the certain area of the imager (9) is smaller than the certain area of the focal plane.
